# EUROPEAN PATENT SPECIFICATION

(11) **EP 0 747 463 B1**
(45) Date of publication and mention of the grant of the patent: **17.03.2004**
(21) Application number: 95941854.2
(22) Date of filing: 22.12.1995
(51) Int. Cl.: C10G 1/10, B09B 3/00, C08J 11/10

(54) **METHOD FOR CONTINUOUS LIQUEFACTION OF WASTE PLASTICS**
METHODE ZUR KONTINUIERLICHEN VERFLÜSSIGUNG VON PLASTIKABFÄLLEN
PROCEDE DE LIQUEFACTION CONTINUE DE MATIERES PLASTIQUES DE RECUPERATION

(30) Priority: 27.12.1994 JP 32485594
(43) Date of publication of application: 11.12.1996
(73) Proprietor: Kuroki, Takeshi, Miyazaki-shi, Miyazaki-ken (JP)
(72) Inventor: KUROKI, Takeshi, Miyasaki-shi, Miyazaki-ken (JP)
(74) Representative: Gold, Tibor Z.
(86) International application number: PCT/JP1995/002643
(87) International publication number: WO 1996/020254

(56) References cited:
- JP-A- 4 742 968
- JP-A- 5 263 079
- JP-A- 48 095 478
- JP-A- 51 108 003
- US-A- 4 235 676
- Microfilm of Japanese Utility Model Application No. 60853/1977, (JP, 52-156769, U), (Shin Meiwa Industry Co. Ltd.), 28 November 1977.

## Description

### TECHNICAL FIELD

The present invention relates to a technique of preparing oil by thermally decomposing waste plastics, and more particularly to a technique of efficiently preparing an oil product having a composition highly suitable as a fuel oil for industrial burners etc.

### BACKGROUND OF THE INVENTION

Although various ideas and modes of apparatus have been proposed to prepare oil from waste plastics, it is a matter of fact that none of them have been operationally practicable.

By way of example, there is a technique of applying the mechanism of an extrusion molding machine, the technique comprising continuously conducting thermal decomposition of waste plastics into oil under heat while continuously carrying them by a continuous carrying means like a screw conveyer which is characteristic of the extrusion molding machine. In applying the mechanism of the extrusion molding machine, the extrusion molding machine, being a highly established technology, has been highly expected that a resultant machine in a compact form will have a relatively large throughput, and will permit continuous automatic processing. Therefore, many researches and developments have been conducted all over the world, but no machine has been yet put into practice as mentioned before.

JP-A-4 742 968 describes preparing oil from mastic-plastic by heating in a melting zone and a decomposition zone such that the gasified components are guided to the outside of the reaction vessel.

One of the major reasons why the conventional technology of preparing oil including the method of extrusion molding is the evolution of a large quantity of carbon in the decomposition process. Carbon generated in large quantity will attach to the inner wall of a decomposition reactor and thereby inhibits heat transfer and renders a stable control of the decomposition reaction difficult. As a result, recovered products having a desired composition cannot be efficiently obtained. Furthermore, since a great deal of efforts and time are required and the reaction processes become increasingly dangerous, many supervisory personnel are required. As a result, the machine will be economically poor and, therefore, cannot be operated as a practical machine.

In addition, insufficient controllability of the recovered products is also an obstacle to practical use. Although the recovered products preferably has a constituent composition suitable as a fuel oil for industrial burners etc., the recovered products by conventional techniques have a reduced quality due to contamination of carbon, or not suitable as a fuel oil due to contamination of too much gasoline derived from over-decomposition. It is, therefore, impossible to enhance the added value for practical operation of a system, and thus the recovered products cannot be applied for the operation of a practical system.

In order to prevent evolution of carbon and to control the composition of the recovered products which are required for realizing practical operation of preparing oil, exact knowledge on the mechanism of polymer decomposition and carbon evolution and proper countermeasures based on the information should be required. In this regard, however, the conventional technologies have been insufficient, and they can neither effectively prevent the evolution of carbon nor effectively control the composition of the recovered products.

From the above standpoint, the inventor conducted a thorough research and analysis on the mechanism of polymer decomposition and carbon evolution, and obtained the following findings. First, the decomposition of a polymer into oil was found to take place in the following processes: the solid material is melt and liquefied, which is then heated in the liquefied state to decompose the higher structure of the polymer to a lower structure, and then at this state decomposition starts for the first time, which causes the evolution of gasified components having different molecular weights depending on different decomposition temperatures, and the gasified components is cooled to yield a recovered product having a fixed composition. The composition of the recovered product is most significantly affected by the control of the heating temperature and the decomposition reaction in the liquid state. Therefore, the control of the heating temperature and the decomposition reaction for the liquid state is most important for the resultant composition of the recovered product.

Carbon is mostly generated when the gasified components evolved in decomposition, especially those in which low molecular weight components are more predominant, are excessively heated. All the conventional processes are conducted under the conditions in which the gasified components cannot be free from the excessive heating because they are contained or trapped in the solid materials and the liquefied components, which is the biggest reason for the generation of a large quantity of carbon. It is therefore most important that the gasified components evolved from the liquefied components be immediately separated from the latter so that the former may not be exposed to excessive heating.

Especially, in the conventional techniques employing a mechanism of the extrusion molding machine, the liquid components after liquefaction are conveyed in the compressed highly dense form due to the extrapolation of the idea in the molding field that the compressing power and the shear stress derived from the strong conveying by the screw should also be used as a heat source. As a result, the liquid components tend to be contained and cause the generation of a large quantity of carbon. Furthermore, since a thick layer is formed by a polymer having low thermal conductivity, the effective control of the temperature of its center becomes difficult, thus disenabling the effective control of the composition of the recovered product.

### DISCLOSURE OF THE INVENTION

The purpose of the present invention which was made based on the above findings is to prepare oil from waste plastics, especially oil preparation technique which utilizes a mechanism of the extrusion molding machine and is expected to have the above-mentioned advantages, characterized in that an effective control of the decomposition process is conducted in order to effectively prevent the generation of carbon and to efficiently obtain the recovered product having a desired composition.

More specifically, the present invention provides a method according to claim 1 of continuously preparing oil from waste plastics. Advantageously the method employs one or a plurality of reactors connected in stages and having built in a carrying means which continuously carries sideways subject substance from a supply side to a discharge side in a horizontal or a slightly slanted state as appropriate, in which reactors, the waste plastics are heated and decomposed into oil as carried, wherein a melting zone and a decomposing zone are formed in the carrying direction defined by one or a series of reactors as a unit, in the melting zone the waste plastics in a solid form ia melt and liquefied, and in the decomposing zone the liquefied components supplied from the melting zone is allowed to form a shallow liquid phase section at the bottom of the reactors, and at the same time the gasified components derived from the decomposition and gasification of the liquefied components at the liquid phase section is allowed to form a gas phase section having a sufficiently large volume as compared with that of the liquid phase section on top of the liquid phase section, then the gasified components filling the gas phase section is guided to the outside and cooled, and is finally recovered as an oil.

The method is characterized in that a liquid phase section and a gas phase section are formed in the decomposing zone wherein a sufficiently large volume is allocated to the gas phase section compared to the liquid phase section, while the liquid phase section is formed thin. As a result, the effect due to the low conductivity of the polymer can be reduced so that the temperature control of the liquefied components in the liquid phase section is facilitated and the recovered product with a desired composition can be easily obtained. Furthermore, it is also possible to quickly separate the gasified components obtained from the liquefied components so as to prevent the gasified components from being exposed to excessive heat, thereby effectively preventing the evolution of carbon. Since the evolution of carbon is effectively prevented, stable control of the decomposition reaction is facilitated to efficiently prepare the recovered product with a desired composition, to greatly reduce the burden of maintenance of the apparatus, and to practically eliminate the monitoring of the reaction process, which leads to realization of unmanned operation.

Such gas phase section also serves to effectively control the composition of the recovered product. Particularly, keeping the temperature in the gas phase section lower than that of the liquid phase section can generate a spontaneous convection of the gasified components in the gas phase section. Due to this convection, only the large molecular weight components return to the liquid phase section to undergo decomposition again into small molecular weight components, thus allowing to keep the molecular weight distribution of the recovered product in a narrow range.

In order to effectively utilize the above mechanism, the gas phase section is provided with enough volume to permit effective generation of spontaneous convection of the gasified components as described above, and the heating control at the gas phase section is separated from that at the liquid phase section in order to maintain the temperature of the gas phase section lower than that in the liquid phase section.

In accordance with the invention, the liquefied components are brought into contact with a catalyst in the liquid phase section as the above-mentioned separation of the liquid phase section from the gas phase section takes place. Thus, the contact of only the liquefied components with a catalyst in the liquid phase section is also important for control of the decomposition reaction under the liquefied state as described above, and contributes a great deal to attaining a desired composition of the recovered product. This point is further explained below in comparison with the conventional methods of using catalyst.

The conventional idea assumed that the catalyst works only in the gas phase, and thus the gasified components generated from the decomposition was brought into contact with the catalyst resulting in an excessive decomposition leading to generation of a large quantity of gasoline. Thus, in the conventional methods, no catalyst has been practically used in the oil preparation and decomposition process in an essential meaning, but the catalyst was used in secondary processes after the decomposition, which was responsible for modifying the composition of the recovered product into an undesirable direction. On the other hand, in the present invention the catalyst is used in the oil preparation and decomposition process in an essential meaning, and the action can be used only for the decomposition, in other words the catalyst can be reacted not to the gasified components derived from the decomposition but only to the liquefied polymer, with the result that decomposition efficiency can be greatly increased and the recovered product with a desired composition can be obtained in a high efficiency.

The continuous oil preparing apparatus for realizing the continuous method described above of preparing oil has a basic structure comprising one or a plurality of reactors connected in stages and having built in a carrying means which continuously carries the subject substance from the supply side to the discharge side in a horizontal state, in which reactors the waste plastics are heated and decomposed into oil as carried wherein a melting zone and a decomposing zone are formed in the carrying direction defined by one or a series of reactors as a unit. In the melting zone, the waste plastics in a solid form is melt and liquefied, and in the decomposing zone the liquefied components supplied from the melting zone is allowed to form a shallow liquid phase section at the bottom of the reactors, and at the same time the gasified components derived from the decomposition and gasification of the liquefied components at the liquid phase section is allowed to form a gas phase section having a sufficiently large volume as compared with that of the liquid phase section on top of the liquid phase section. The gasified components filling the gas phase section is guided to the outside and cooled, and is finally recovered as an oil. At a site corresponding to the above decomposing zone, this apparatus is provided with a carrying means for carrying the gasified components in the liquid phase section in close proximity to the bottom of the reactor, and with on the carrying means a space for the above gas phase section.

### BRIEF DESCRIPTION OF THE DRAWINGS

Fig. 1 shows a schematic side view of the essential part of the continuous oil preparing apparatus for use in the method of the present invention; and
Fig. 2 shows a cross sectional view along the line SA-SA in Fig. 1.

### MODE FOR CARRYING OUT THE INVENTION

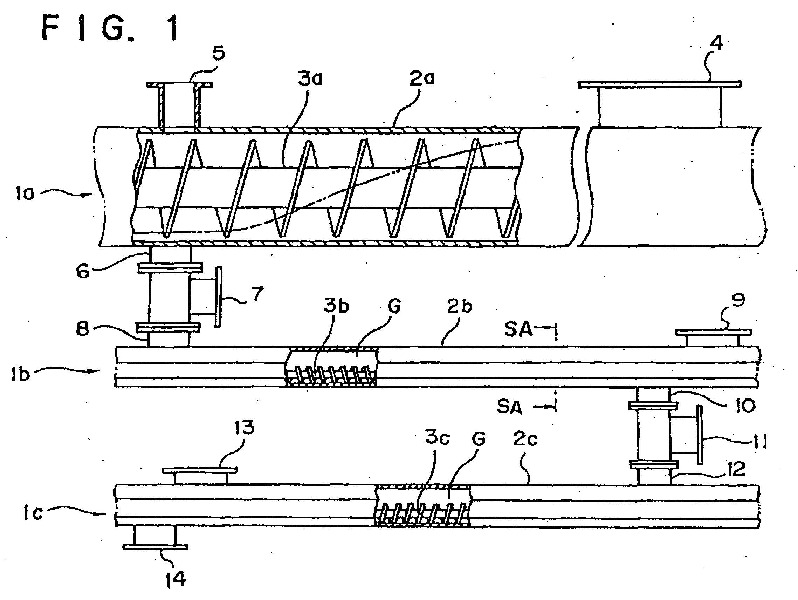

An embodiment of the invention will be described below. In an embodiment of the present invention, a continuous oil preparation apparatus as shown in Fig. 1 is used. The continuous oil preparation apparatus comprises three reactors 1a, 1b, and 1c connected in stages in a vertical direction. Reactors 1a, 1b, and 1c have a double-spindle screw 3a, 3b, and 3c as a carrying means in a cylindrical casing 2a, 2b, and 2c, respectively. Each reactor 1a, 1b, and 1c can be heated by a respective external heating means (not shown in the figure).

For the upper reactor 1a, the inner periphery of the casing 2a is slightly larger than the outer periphery of the screw 3a. Near one end of the casing 2a, a feed section 4 is provided, and near the other end is provided a first gas vent 5 and an outlet 6, which outlet 6 is connected to an inlet 8 of the reactor 1b in the middle stage, with a second gas vent 7 interposed between the inlet 8 and outlet 6.

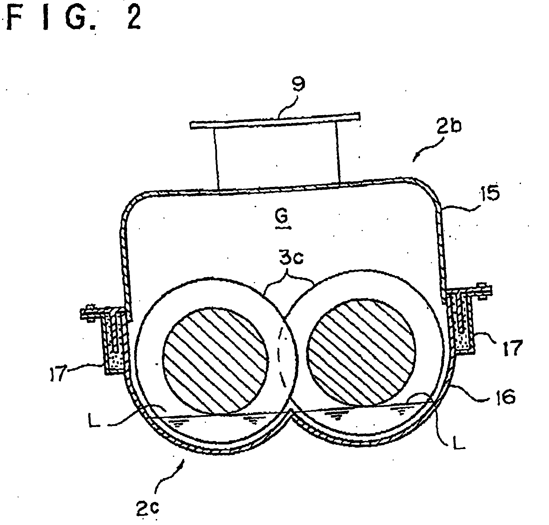

On the other hand, for the reactors 1b and 1c in the middle and the bottom stage, respectively, the height of the casings 2b and 2c are about one third that of the casing 2a of the reactor 1a in the upper stage. And the screws 3b and 3c which have a height about half that of the casings 2b and 2c are situated along the bottom of the casings 2b and 2c. As a result, a space having a certain volume is formed as a gas phase G on top of the screws 3b and 3c. In addition to the above inlet 8, the reactor 1b in the middle stage is equipped with a third gas vent 9 and an outlet 10 near each end of the casing 2b. The reactor 1c in the lower stage is equipped with an inlet 12 connected to the outlet 10 of the reactor 1b In the middle stage mediated by a fourth gas vent 11 near one end of the casing 2c, and is equipped with a fifth gas vent 13 and an outlet 14 near the other end. Furthermore, as shown for the reactor 1b in the middle stage in Fig. 2, the casings 2b and 2c of the reactors 1b and 1c are formed by an upper casing member 15 and a lower casing member 16, which members 15 and 16 are connected to a connection port 17 having an air tight structure.

To each reactor 1a, 1b, and 1c is connected a drive system which drives and rotates the screw 3a, 3b, or 3c, respectively. Since the system is of the conventional type, it is not shown in the figure.

The continuous oil preparation from waste plastics with this continuous oil preparation apparatus is conducted as follows: From a introduction section 4 of the reactor 1a in the upper stage is continuously supplied waste plastics in the solid form which were subjected to a predetermined pulverization treatment in mixture with a granular catalyst such as silica particles. This is gradually melt and liquefied under heat while being carried by the screw 3a. This distance constitutes a melting zone which occupies about 80% of the actual length of 2 a of the reactor 1a in the upper stage.

At the end of the melting zone, the liquefied components having low viscosity become predominant and cluster with the catalyst to form thin layers of a few centimeters at the bottom of the casing 2a (the alternate long and two short dashes line in Fig. 1 indicates the waste plastics in the solid form which is in the process of being melt and liquefied and decreasing its volume to become thin layers). This site represents an initial decomposing zone which links the melting zone with the decomposing zone described below, where decomposition and gasification of the liquefied components gradually begin, and the evolved gasified components are discharged from the first gas vent 5 into the recovery apparatus outside the figure, and cooled and recovered.

The low-viscous liquefied components from the initial decomposing zone flow through the outlet 6 and the inlet 8 down to the reactor 1b in the middle stage. The reactor 1b in the middle stage is combined with the reactor 1c connected to in the lower stage forms the decomposing zone. The liquefied components which was discharged to the reactor 1b in the middle stage or the decomposing zone are carried by the screw 3b to the side of the outlet 10 in the state of a shallow liquid phase L which was formed at the bottom of the casing 2, and while being carried the liquefied components is subjected to heating at a heating temperature at the liquid phase L (for example, about 450°C for polystyrene and about 600°C for polyethylene) and thereby decomposed to release the gasified components into the gas phase G.

In the gas phase G, although the low molecular weight components among the gasified components are light, they are discharged from both the second gas vent 7 and the third gas vent 9, the high molecular weight components are cooled in the gas phase G in an atmosphere of the temperature controlled to be lower (for example, about 300°C for polystyrene and about 450°C for polyethylene) than the liquid phase L and fall down to the liquid phase of higher temperature, where they are heated and decomposed again to become low molecular weight components. In other words, in the gas phase G, due to the difference from the temperature of the liquid phase, active vertical convection of the gasified components arise to facilitate the reduction of high molecular components.

The above-mentioned reactions take place in a completely same manner at the reactor 1c in the lower stage for the gasified components which was discharged from the reactor 1b in the middle stage. Finally, non-decomposed substances are discharged from the outlet 14 of the reactor 1c in the lower stage and recovered.

The oil products thus obtained had, as the major components, a component corresponding to kerosene, a component corresponding to light oil, and a component corresponding to A heavy oil, and thee ratio of components reaches 98% in the case of polystyrene to have a composition suitable as an industrial burner fuel.

With the structure based on the embodiment of the present invention described above, a specific example in which a throughput of 60 kg/hr is expected has the following structure: For the reactor 1a in the upper stage, the casing 2a is about 22 cm in height and about 3 m in whole length; and the casings 2b and 2c for the reactors 1b and 1c in the middle and the lower stage respectively have a height about one-third that of the reactor 1a in the upper stage, and a total length is slightly shorter than the reactor 1a in the upper stage, constituting a very compact structure.

### INDUSTRIAL APPLICABILITY

As described above, the present invention can eliminate such problems as carbon generation and the control of quality of the recovered oil in the technology of oil preparation utilizing the extrusion molding mechanism, and permits a practical operation of the continuous oil preparation technology which makes the best use of the advantages of the compact size of the overall apparatus and the continuous automatic processing by application of the extrusion molding mechanism.

## Claims

1. A method of continuously preparing oil from waste plastics using one or more of a plurality of reactors connected in stages, said reactors having there in a means for continuously conveying a subject substance in a horizontal state from a supply inlet to a discharge outlet thereof, the method comprising heating and decomposing the waste plastics by carrying the waste plastics through a melting zone and a decomposing zone formed in the conveying direction and defined by one or more of a series of the reactors as a unit, said waste plastics in the solid form being melted and liquefied in said melting zone, and the liquefied components supplied from the melting zone forming in said decomposing zone a shallow liquid phase section at the bottom of the reactor(s) and at the same time a gas phase section on top of said liquid phase section comprising gasified components derived from the decomposition and gasification of the liquefied components and having a substantial volume as compared with that of said liquid phase section, wherein a heating temperature in the gas phase section is maintained lower than that of the liquid phase section, and said method further comprising guiding said gasified components in said gas phase section to the outside, cooling the same, and then recovering the same as oil.

2. A method as defined in claim 1 wherein said liquefied components in the liquid phase section are brought into contact with a catalyst.

## Patentansprüche

1. Verfahren zur kontinuierlichen Herstellung von Öl aus Abfallkunststoffen unter Verwendung eines oder mehrerer einer Mehrzahl von Reaktoren, welche stufenweise verbunden sind, wobei die Reaktoren darin Mittel zur kontinuierlichen Beförderung eines Materials in einem horizontalen Zustand von einem Zuführeinlass zu einem Abführauslass davon aufweisen, wobei das Verfahren Erwärmen und Zersetzen der Abfallkunststoffe durch Befördern der Abfallkunststoffe durch eine Schmelzzone und eine Zersetzungszone umfasst, welche in der Förderrichtung ausgebildet und durch einen oder mehrere einer Reihe von Reaktoren als eine Einheit definiert sind, wobei die Abfallkunststoffe in der festen Form in der Schmelzzone geschmolzen und verflüssigt werden und die verflüssigten Komponenten, welche aus der Schmelzzone zugeführt werden, in der Zersetzungszone einen flachen Flüssigphaseabschnitt am Boden des Reaktors/der Reaktoren und gleichzeitig einen Gasphaseabschnitt auf der Oberseite des Flüssigphaseabschnitts bilden, welcher vergaste Komponenten, die von der Zersetzung und Vergasung der verflüssigten Komponenten herrühren, umfasst und ein beträchtliches Volumen im Vergleich zu dem des Flüssigphaseabschnitts aufweist, wobei eine Heiztemperatur im Gasphaseabschnitt niedriger gehalten wird als die des Flüssigphaseabschnitts und wobei das Verfahren des Weiteren Führen der vergasten Komponenten im Gasphaseabschnitt nach außen, Abkühlen derselben und anschließendes Wiederaufbereiten derselben als Öl umfasst.

2. Verfahren nach Anspruch 1, wobei die verflüssigten Komponenten im Flüssigphaseabschnitt mit einem Katalysator in Kontakt gebracht werden.

## Revendications

1. Procédé de préparation d'huile en continu à partir de matières plastiques de récupération avec utilisation d'un ou davantage parmi plusieurs réacteurs connectés en étages, lesdits réacteurs comportant, incorporé dedans, un moyen pour transporter en continu une substance considérée dans une position horizontale, depuis une entrée d'alimentation jusqu'à une sortie de déchargement, le procédé comprenant le chauffage et la décomposition des matières plastiques de récupération par transport de ces matières plastiques de récupération à travers une zone de fusion et une zone de décomposition formées dans la direction de transport et définies par un ou davantage parmi une série de réacteurs en tant qu'une unité, lesdites matières plastiques de récupération sous forme solide étant fondues et liquéfiées dans la dite zone de fusion, et les composants liquéfiés provenant de la zone de fusion formant dans ladite zone de décomposition une section de phase liquide peu épaisse au fond du (des) réacteurs (s) et en même temps une section de phase gazeuse au-dessus de ladite section de phase liquide comprenant les composants gazéifiés dérivés de la décomposition et de la gazéification des composants liquéfiés et possédant un volume substantiel en comparaison de celui de ladite section de phase liquide, la température de chauffage dans la section de phase gazeuse étant maintenue inférieure à celle de la section de phase liquide, et ledit procédé comprenant en outre le guidage desdits composants gazéifiés dans ladite section de phase gazeuse vers l'extérieur, le refroidissement de ces derniers puis leur récupération sous forme d'une huile.

2. Procédé tel que défini dans la revendication 1 dans lequel lesdits composants liquéfiés dans la section de phase liquide sont mis en contact avec un catalyseur.
